Europäisches Patentamt

(19) European Patent Office

Office européen des brevets

(11) Publication number: **0 453 220 A2**

(12) **EUROPEAN PATENT APPLICATION**

(21) Application number: 91303332.0

(51) Int. Cl.$^5$: **B29D 30/30**

(22) Date of filing: 16.04.91

(30) Priority: 20.04.90 JP 104691/90

(43) Date of publication of application:
23.10.91 Bulletin 91/43

(84) Designated Contracting States:
DE ES FR GB IT

(71) Applicant: Bridgestone Corporation
10-1, Kyobashi 1-Chome Chuo-Ku
Tokyo 104 (JP)

(72) Inventor: Nakajima, Tsuneharu
1-32, Jyosui-Minami-cho 1-Chome
Kodaira City, Tokyo (JP)
Inventor: Tokunaga, Toshio
3-4, Hachima-Cho 3-chome
Fuchu City, Tokyo (JP)
Inventor: Nakashima, Hiroshi
78-204, Toyoura
Kuroiso City, Tochigi Pref. (JP)

(74) Representative: Whalley, Kevin et al
MARKS & CLERK 57/60 Lincoln's Inn Fields
London WC2A 3LS (GB)

(54) Cord Winding apparatus.

(57) A cord winding apparatus is used for supplying and spirally winding a cord to and around an outer surface of a toroidal tire constituent member rotating about its axis. The apparatus includes a movable frame (20), a guide mechanism (24) for guiding a cord (C) paid out of an external bobbin, a supply roller (25) for supplying and pressing the cord introduced through the guide mechanism against the outer surface of the tire constituent member (1), a tension mechanism (50) for giving tensile force to the cord between the guide mechanism and the supply roller, a detection means (53) for detecting tensile force of the cord, and moving means (38) for moving the movable frame along the outer surface of the tire constituent member in its meridan direction, while keeping the cord between the supply roller and the guide mechanism always extending substantially along a normal (H) to the outer surface of the tire constituent member. The guide mechanism (24) includes a first roller (41) for guiding the cord, a rocking base (42) rockable about a substantially vertical rocking axis, and a second roller (44) for guiding the cord upstream of the first roller. An extension of the cord from the second roller (44) to the first roller (41) is coaxial to the rocking axis of the rocking base (42).

EP 0 453 220 A2

Jouve, 18, rue Saint-Denis, 75001 PARIS

FIG.1

This invention relates to a cord winding apparatus for supplying a cord to a toroidal tire constituent member and spirally winding the cord around the tire constituent member being rotating about its axis.

Such a cord winding apparatus has been known, for example, as disclosed in Japanese Patent Application Laid-open No. 62-48,535. This disclosed apparatus includes a movable frame, and a guide roller provided at the rearward end of the movable frame remote from a tire constituent member for guiding a cord. The apparatus further includes a supply roller rotatably supported at the forward end of the movable frame for supplying the cord introduced through the guide roller to the tire constituent member and pressing the cord against the outer surface of the tire constituent member, and a moving mechanism for moving the movable frame along the outer surface of the tire constituent member in its meridian direction.

In order to prevent the cord from slidingly falling off the outer surface of the tire constituent member and from being attached to the outer surface in uneven density in moving the movable frame by means of the moving mechanism, the movement of the movable frame is controlled in a manner that the cord between the supply roller and the guide roller always extends substantially along a normal to the outer surface of the tire constituent member.

With this apparatus, in order to avoid disengagement of the cord paid out of an external bobbin arranged rearward of the apparatus from the guide roller in moving of the guide and supply rollers in meridian direction of the tire constituent member, the cord is guided in the following manner. That is to say, after the cord paid out of the external bobbin has once been led to a guiding roller arranged immediately above the guide roller, the advancing direction of the cord is turned into a lower direction toward the guide roller with the aid of the guiding roller.

With this cord winding apparatus, however, advancing angles of the cord to the guide roller are changed by the movement of the guide and supply rollers in the meridian direction of the tire constituent member. Therefore, tensile force of the cord in winding operation is delicately changed so that wound state of the cord becomes uneven over the entire length of the cord. Moreover, the guiding roller must be arranged above the guide roller separately therefrom so that whole the apparatus becomes large-sized and expensive.

It is an object of the invention to provide a cord winding apparatus which eliminates all the disadvantages of the prior art and which is small-sized and inexpensive and capable of maintaining a cord under a constant tensile force even if a supply roller moves in a meridian direction of a tire constituent member.

In order to accomplish this object, in a cord winding apparatus for supplying and spirally winding a cord to and around an outer surface of a toroidal tire constituent member rotating about its axis, the apparatus according to the invention comprises a movable frame, a guide mechanism provided at the rearward end of the movable frame remote from the tire constituent member for guiding a cord paid out of an external bobbin, a supply roller rotatably supported at the forward end of the movable frame for supplying and pressing the cord introduced through a guide mechanism against the outer surface of the tire constituent member, a tension mechanism mounted on the movable frame for giving tensile force to the cord extending between the guide mechanism and the supply roller, a detection device mounted on the movable frame for detecting tensile force of the cord extending between the tension mechanism and the supply roller, and moving mechanism for moving the movable frame along the outer surface of the tire constituent member in its meridian direction, while keeping the cord extending between the supply roller and the guide mechanism always extending substantially along a normal to the outer surface of the tire constituent member, and said guide mechanism comprising a first roller rotatably supported by the movable frame for guiding the cord, a rocking base supported by the movable frame to be able to rock about a substantially vertical rocking axis, and a second roller rotatably supported by the rocking base for guiding the cord upstream of the first roller, an extension of the cord extending from the second roller to the first roller being coaxial to said rocking axis of the rocking base.

In order to wind a cord around the outer surface of a tire constituent member, the cord paid out of the external bobbin and led through the guide mechanism is supplied to the supply roller where the cord is pressed against the outer surface of the tire constituent member by means of the supply roller. In this case, the movable frame supporting the supply roller and the guide mechanism is moved along the outer surface of the tire constituent member in its meridian direction by means of the moving mechanism. Consequently, the cord is spirally wound around the outer surface of the tire constituent member substantially in its circumferentially direction.

In this case, moreover, the movement of the movable frame is so controlled that the cord between the supply roller and the guide mechanism always extends substantially along the normal to the outer surface of the tire constituent member, with the result that the cord is wound around the tire constituent member well-regulated and with a constant number of turns per unit width of the tire constituent member.

In such a winding operation, the intersection angles between the cord extending from the supply roller to the guide mechanism and the cord extending from the guide mechanism to the external bobbin change as the movable frame moves. Therefore, it may be supposed that the cord disengages from a roller of the guide mechanism. In order to avoid this, the following arrangement is employed according to the invention.

The guide mechanism comprises the first roller rotatably supported by the movable frame for guiding the cord, the rocking base supported by the movable frame so as to be rockable about the substantially vertical rocking axis, and the second roller rotatably supported by the rocking base for guiding the cord upstream of the first roller. Moreover, the extension of the roller extending from the second roller to the first roller is located coaxial to the rocking axis of the rocking base.

As a result of this, even if the intersection angles between the cords change, twisting of the cord between the first and second rollers accommodates or absorbs such a change of the intersection angles. Consequently, there is no risk of any change in tensile force in the cord extending from the supply roller to the guide mechanism due to the change in the intersection angles.

Moreover, as such an accommodation of the change of the intersection angles is carried out in the guide mechanism, whole the apparatus becomes small-sized and inexpensive to install the apparatus. Furthermore, according to the invention, the tension mechanism gives tensile force to the cord between the guide mechanism and the supply roller to control the tensile force in the cord within a suitable value in winding of the cord. Moreover, as the tensile force of the cord immediately before the winding is also detected by means of the detection device, the tensile force can be properly controlled according to the invention.

The invention will be more fully understood by referring to the following detailed specification and claims taken in connection with the appended drawings.

Fig. 1 is a schematic front elevation of an apparatus of one embodiment according to the invention;

Fig. 2 is a plan view of a principal part of the apparatus shown in Fig. 1;

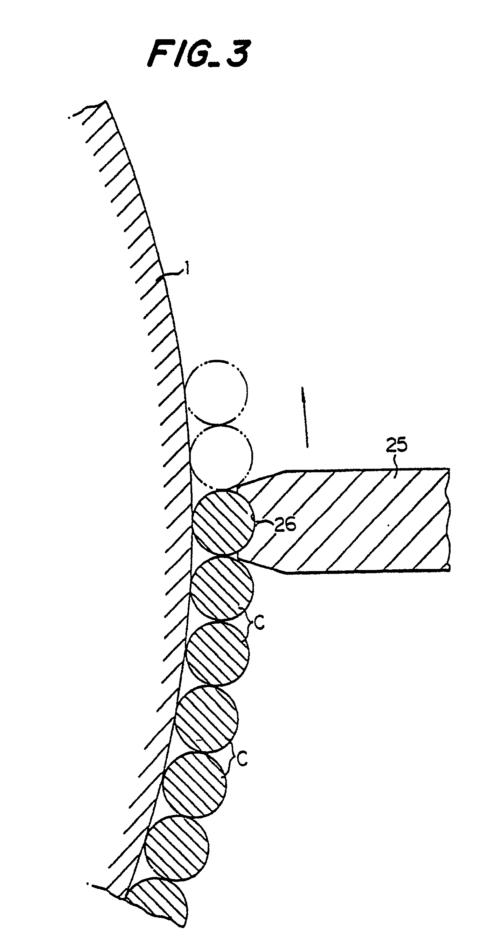

Fig. 3 is a sectional plan view illustrating a winding state of a cord around a tire constituent member; and

Fig. 4 is a front elevation of a cord end processing mechanism used in the apparatus according to the invention viewed in a direction shown by arrows IV in Fig. 1.

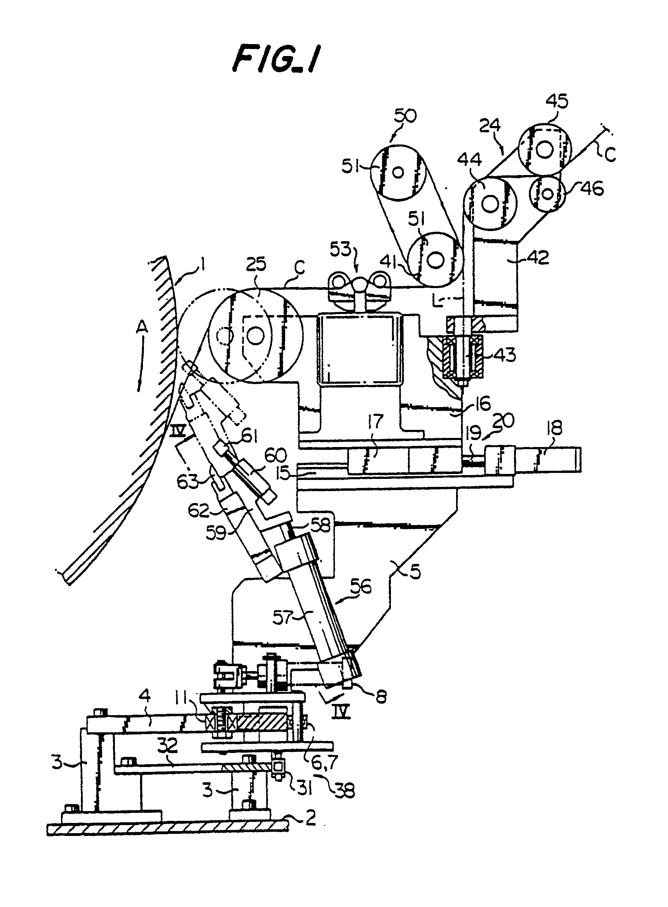

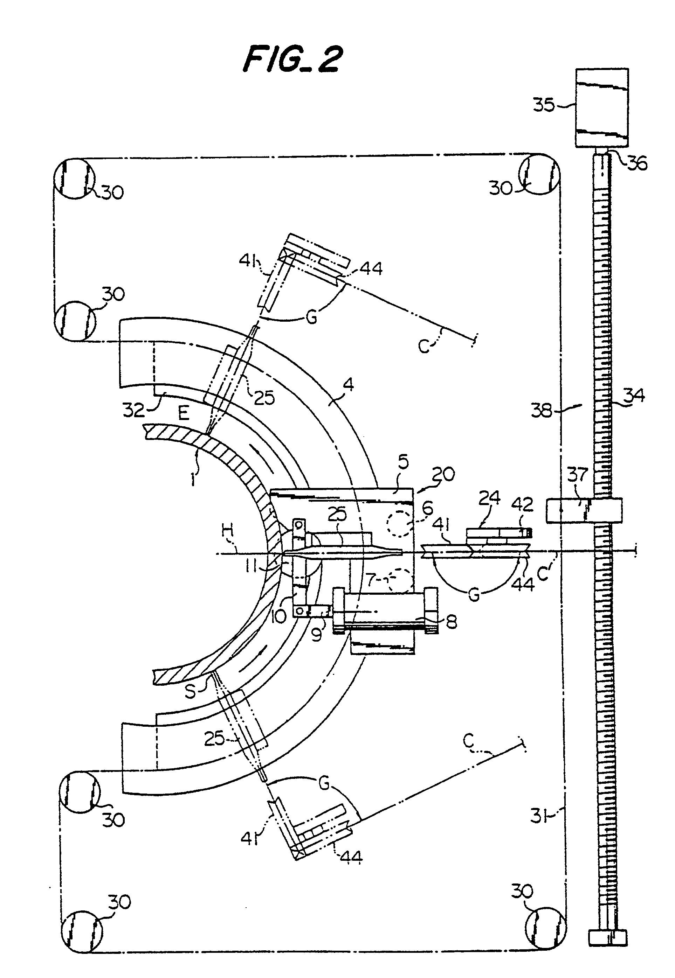

Referring to Figs. 1 and 2, a toroidally deformed tire constituent member 1, for example, a carcass is rotated about its horizontal axis in the direction shown by an arrow A with its bead portion held by a rim. A flat base plate 2 is arranged on the rear side of the tire constituent member 1 and has a plurality of posts 3 upstandingly provided on the base plate 2. An arcuate horizontal guide plate 4 is mounted on upper ends of the posts 3 and extends along an outer surface of the tire constituent member 1 in its meridian section. In the event that a shape of the outer surface of the tire constituent member 1 in the meridian section is a circular arc having a single point center, the guide plate 4 is also in the form of a circular arc whose center of curvature is coincident with the center of curvature of the outer surface of the tire constituent member 1.

A moving frame 5 is supported by the guide plate 4 and has a pair of rollers 6 and 7 rotatably supported by the lower end of the moving frame so as to roll along outer circumferential surfaces of the guide plate 4. A cylinder 8 extending toward the tire constituent member 1 is mounted on the lower end of the moving frame 5. The cylinder 8 includes a piston rod whose rod end is connected to one end of an arm 10. The other end of the arm 10 is connected to the moving frame 5. A roller 11 is rotatably supported by the mid portion of the arm 10 in a manner rolling along the inner circumferential surface of the guide plate 4. These rollers 6, 7 and 11 are arranged such that the rotating axes of these rollers are positioned at vertexes of an imaginary isosceles triangle and a median of the isosceles triangle is coincident with a normal H to the outer surface of the tire constituent member 1.

On the upper surface of the moving frame 5 are arranged rails 15 in parallel with the normal H to the outer surface of the tire constituent member 1. A slide frame 16 is arranged above the rails 15. On the underside of the slide frame 16 are mounted slide bearings 17 slidably engaging the rails 15. A cylinder 18 is secured to the upper surface of the moving frame 5 and in parallel with the rails 15. The slide frame 16 is connected to the rod end of the piston rod 19 of the cylinder 18. Consequently, when the cylinder is actuated, the slide frame 16 is moved along the rails 15 toward and away from the tire constituent member 1. The moving frame 5 and slide frame 16 form as a whole a movable frame 20 movable along the guide plate 4.

A guide mechanism 24 is provided on the movable frame 20 or in more detail on the rear end of the slide frame 16 remote from the tire constituent member 1. To the guide mechanism 24 is led a cord C, for example, bare cord or rubber coated cord paid out of an external bobbin (not shown). On the other hand, on the front end of the slide frame 16 nearer to the tire constituent member 1 is supported a supply roller 25 in the form of a disc rotatable about a horizontal axis, to which the cord C passed through the guide mechanism 24 is led. The supply roller 25 and a first roller 41 later described are arranged on the median of the imaginary isosceles triangle formed by the axes of the rollers 6, 7 and 11. The supply roller 25 is formed in its outer circumferential surface with a guide groove 26 extending in the circumferential direction and having a semi-circular section. Part of the cord C is inserted into the guide groove 26 for guiding the cord C.

Referring again to Figs. 1 and 2, a plurality (six in this embodiment) of sprockets 30 are provided so as to be rotated about vertical axes. An endless chain 31 extends around the sprockets 30. A horizontal guide plate 32 is fixed to the posts 3 and arranged immediately below the guide plate 4. The guide plate 32 extends along the outer surface of the tire constituent member 1 in the meridian section in the same manner as in the guide plate 4. The chain 31 slidably contacts an outer surface of the guide plate 32.

A screw shaft 34 extends along the chain 31 and is connected to the output shaft 36 of a motor 35. The screw shaft 34 is threadedly engaged in a movable block 37 connected to a mid portion of the chain 31. As a result of this, when the motor 35 is energized to rotatively drive the screw shaft 34, the movable block 37 is moved along the screw shaft 34 to drive the chain 31 with the result that the chain 31 moves in slidable contact with the outer circumferential surface of the guide plate 32.

Moreover, the movable frame 20 is connected to a mid portion of the chain 31 so that when the chain 31 is moved, the movable frame 20 is moved guided by the guide plate 4 along the outer surface of the tire constituent member 1. In this case, the rollers 6, 7 and 11 always contact the outer and inner circumferential surfaces of the guide plates 4. Therefore, the cord C between the guide mechanism 24 and the supply roller 25 is always maintained in an extending condition substantially along the normal H to the outer surface of the tire constituent member 1.

The rollers 6, 7 and 11, the sprocket 30, the chain 31, the guide plate 32, the screw shaft 34, the motor 35 and the movable block 37 form as a whole a moving mechanism 38 for moving the movable frame 20 along the outer surface of the tire constituent member 1 in the meridian direction thereof, while maintaining the cord C between the supply roller 25 and the guide mechanism 24 always along the normal H to the outer surface of the tire constituent member 1.

The guide mechanism 24 comprises a first roller 41 rotatably supported by the slide frame 16, whose rotating axis is in parallel with the axis of the supply roller 25. Moreover, the guide mechanism 24 comprises a rocking base 42 supported by the rear end of the slide frame 16 through a vertical shaft 43 so as to be rocked in a horizontal plane. The guide mechanism 24 further comprises a second roller 44 rotatably supported by the upper portion of the rocking base 42 and positioned above the first roller 41 for guiding the cord C upstream of the first roller 41.

The forward end of the second roller 44 is positioned immediately above the rearward end of the first roller 41, while the forward end of the second roller 44 and the rearward end of the first roller 41 are located on an upward extension of the center axis of the vertical shaft 43. As a result of this, the downward extension L of the cord C extending from the second roller 44 to the first roller 41 is coaxial to the center axis of the shaft 43 or the rocking axis of the rocking base 42.

Guide rollers 45 and 46 are rotatably supported by the rocking base 42 rearward of the second roller 44. The cord C paid out of the external bobbin is first fed between these guide rollers 45 and 46 where the advancing direction of the cord C is turned, and then introduced to the second roller 44.

A tension mechanism 50 is arranged between the guide mechanism 24 and the supply roller 25 and mounted on the slide frame 16. The tension mechanism 50 comprises tension rollers 51 upon which constant braking force is exerted. The lower tension roller 51 among the rollers is common to or the same as the first roller 41 of the guide mechanism 24. As a result of this, the entire apparatus can be small-sized and inexpensive. After having passed through the guide mechanism 24, the cord C passes around these tension rollers 51 so as to be given a predetermined tensile force.

A detection device 53 is arranged between the tension mechanism 50 and the supply roller 25 and mounted on the slide frame 16. This detection device 53 detects the tensile force in the cord C between the supply roller 25 and the tension mechanism 50 and outputs the detected results. The detected results are introduced from the detection device 53 to a control device. The control device controls the tension giving degree of the tension mechanism 50 and the influence of the external bobbin on the tension of the cord C or feeds the detected results from the detection device 53 to an alarm device or a display unit for displaying the detected results.

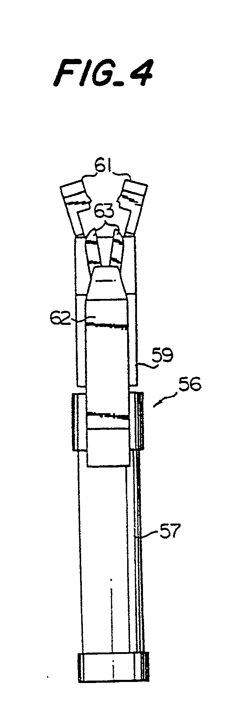

Referring to Figs. 1 and 4, a cord end processing mechanism 56 comprises a cylinder 57 secured to the moving frame 5, a support plate 59 mounted on the rod end of a piston rod 58 of the cylinder 57, a pair of grasping pawls 61 secured to the support plate 59 so as to be opened and closed by actuation of a cylinder 60, and a pair of cutter blades 63 secured to the support plate 59 so as to be opened and closed by actuation of a cylinder 62. When the cord C has been wound around the tire constituent member 1, the cord end processing mechanism 56 grasps and cuts the cord C between the supply roller 25 and the tire constituent member 1 so that the cord C wound around the tire constituent member 1 is separated from the cord C paid out of the external bobbin.

The operation of the apparatus according to the embodiment of the invention will be explained hereinafter.

In winding a cord C around the outer surface of a tire constituent member 1, first the member 1 is rotated about its axis in the direction shown by an arrow A. At the same time, the cord C is paid out of an external bobbin and after passing through the guide mechanism 24, the cord C is led into the guide groove 26 of the supply roller 25. At this moment, the supply roller 25 is pressed against the outer surface of the tire constituent member 1 at a predetermined pressure by means of the cylinder 18. Therefore, the cord C is supplied and pressure-joined to the outer surface of the tire constituent member by means of the supply roller 25.

In this case, moreover, the screw shaft 34 is rotated by energizing the motor 35 so that the chain 31 is moved. As a result of this, the movable frame 20 connected to the chain 31 moves together with the supply roller 25 and the guide mechanism 24 guided by the guide plate 4 along the outer surface of the tire constituent member 1 in its meridian direction. Consequently, the cord C is wound around the outer surface of the tire constituent member 1 spirally and in its circumferential direction.

In moving the movable frame 20, the cord C between the supply roller 25 and the guide mechanism 24 is always maintained so as to extend substantially along the normal H to the outer surface of the tire constituent member 1 owing to the arrangement of the guide plate 4, rollers 6, 7 and 11, the guide mechanism 24 and the supply roller 25 above described. Therefore, the cord C is wound around the outer surface of the tire constituent member 1 well-regulated and with a constant number of turns per unit width of the member 1.

In such a winding operation, moreover, as the movable frame 20 revolves about the tire constituent member 1, intersection angles G between the cord C extending from the supply roller 25 to the guide mechanism 24 and the cord C extending from the guide mechanism 24 to the external bobbin will change as the movable frame 20 moves. It can be supposed that if the intersection angle G is greatly deviated from 180° as shown in phantom lines in Fig. 2, the cord C may be dislodged from the roller of the guide mechanism 24, for example, the first roller 41. In this embodiment, however, as above described the extension L of the cord C extending from the second roller 44 of the guide mechanism 24 to the first roller 41 is coaxial to the rocking axis of the rocking base 42, with the result that twisting of the cord C between the first and second rollers 41 and 44 accommodates or absorb the change of the intersection angle G between the cords C.

Therefore, there is no change in the tension in the cord C between the supply roller 25 and the guide mechanism 24 due to the change in the intersection angle G between the cords. Moreover, such an accommodation of the change in the intersection angle G can be effected in the guide mechanism 24 so that whole the apparatus can be small-sized and inexpensive to install it.

In this embodiment, furthermore, the tension mechanism 50 gives the tensile force to the cord C extending between the guide mechanism 24 and the supply roller 25. Therefore, upon winding the cord C around the tire constituent member 1, the tension of the cord C can be easily controlled to be within a suitable range. Moreover, as the tension of the cord C immediately before the winding is detected by the detection device 53, the tension can be easily and properly controlled.

When the cord C has been spirally wound around the outer surface of the tire constituent member 1 from the winding starting position S to the ending position E in this manner, the rotation of the tire constituent member 1 is stopped. The cylinder 18 is then actuated to retract the movable frame 20, the guide mechanism 24 and the supply roller 25 into positions shown in solid lines in Fig. 1. Thereafter, the cylinder 57 is actuated to move the grasping pawls 61 to the positions shown in phantom lines in Fig. 1. The cylinder 60 is then actuated to grasp the cord C extending between the supply roller 25 and tire constituent member 1 by means of the grasping pawls 61. The cord C extending between the grasping pawls 61 and the tire constituent member 1 is cut off by the cutter blades 63 with the aid of the actuation of the cylinder 62.

Thereafter, the cylinder 57 is actuated to return the grasping pawls 61 grasping the cord C to the initial positions shown in solid lines in Fig. 1. When the next winding operation is started, the supply roller 25 is again pressed against the tire constituent member 1, while the end of the cord C is grasped by the grasping pawls 61. Thereafter, the cord C is released from the grasping by the pawls 61 and the tire constituent member 1 is then rotated.

While the single cord C is shown in the above embodiment, it is apparent that a plurality of cords may be handled with this apparatus according to the invention. Although the first roller 41 of the guide mechanism 24 and the lower tension roller 51 of the tension mechanism 50 are common or the same one, separate rollers may be provided for this purpose. Moreover, in the event that the outer surface of a tire constituent member is a circular arc having a single center, the movable frame may be arranged on an arm radially extending and having a rotating center coincident with the single center.

As can be seen from the above explanation, the apparatus according to the invention can maintain the tension of a cord at a constant value even if the supply roller is moving in a meridian of a tire constituent member. Moreover, the apparatus according to the invention is relatively small and inexpensive.

While the invention has been particularly shown and described with reference to preferred embodiments thereof, it will be understood by those skilled in the art that the foregoing and other changes in form and details can be made therein without departing from the spirit and scope of the invention.

## Claims

1. A cord winding apparatus for supplying and winding a cord to and around an outer surface of a toroidal tire constituent member rotating about its axis, comprising a movable frame (20), a guide mechanism (24) provided at the rearward end of the movable frame remote from the tire constituent member (1) for guiding a cord (C) paid out of an external bobbin, a supply roller (25) rotatably supported at the forward end of the movable frame (20) for supplying and pressing the cord introduced through the guide mechanism (24) against the outer surface of the tire constituent member, a tension mechanism (50) mounted on the movable frame for giving tensile force to the cord extending between the guide mechanism (24) and the supply roller (25), a detection means (53) mounted on the movable frame for detecting tensile force of the cord extending between the tension mechanism (50) and the supply roller (25), and moving means (38) for moving the movable frame along the outer surface of the tire constituent member in its meridian direction, while maintaining the cord extending between the supply roller and the guide mechanism always extending substantially along a normal (H) to the outer surface of the tire constituent member, and said guide mechanism (24) comprising a first roller (41) rotatably supported by the movable frame for guiding the cord, a rocking base (42) supported by the movable frame to be able to rock about a substantially vertical rocking axis, and a second roller (44) rotatably supported by the rocking base (42) for guiding the cord upstream of the first roller (41), an extension of the cord extending from the second roller (44) to the first roller (41) being coaxial to said rocking axis of the rocking base (42).

2. Apparatus as claimed in claim 1, characterized in that said movable frame (20) is supported by an arcuate horizontal guide plate (4) extending along the outer surface of the tire constituent member (1), and the movable frame comprises a moving frame (5) supported by said guide plate (4) and slidably movable along an outer surface of said guide plate, and a slide frame (16) slidably movable parallel with the normal (H) to the outer surface of the tire constituent member.

3. Apparatus as claimed in claim 2, characterized in that said moving frame (5) includes at its lower end a pair of rollers (6,7) arranged to roll on an outer circumferential surface of the guide plate (4) and a roller (11) arranged to roll on an inner circumferential surface of the guide plate, the said rollers (6,7,11) being arranged so that rotating axes of the said rollers are positioned at vertexes of an imaginary isosceles triangle, and a median of the said imaginary isosceles triangle being coincident with a normal (H) to the outer surface of the tire constituent member.

# FIG.1

# FIG_2

# FIG_3

# FIG. 4